# EUROPÄISCHE PATENTANMELDUNG

(11) **EP 3 483 126 A1**
(43) Veröffentlichungstag der Anmeldung: **15.05.2019**
(21) Anmeldenummer: 18204475.0
(22) Anmeldetag: 06.11.2018
(51) Int. Cl.: C02F 9/00, C02F 1/00, C02F 3/12, C02F 11/04, C02F 11/12

(54) **KLÄRANLAGE SOWIE VERFAHREN ZUR BEHANDLUNG VON ABWASSER**

(30) Priorität: 09.11.2017 DE 102017126251
(71) Anmelder: Huber SE, 92334 Berching (DE)
(72) Erfinder: Frommann, Christian, 92318 Neumarkt (DE); Kink, Michael, 92318 Neumarkt (DE)
(74) Vertreter: Baudler, Ron

(57) **Zusammenfassung**

Die Erfindung betrifft ein Verfahren zur Behandlung von Abwasser in einer Kläranlage, wobei das Abwasser eine Rechenanlage (1) und anschließend einen Sandfang (2) passiert, wobei mit Hilfe der Rechenanlage (1) und dem Sandfang (2) Feststoffe unterschiedlicher Partikelgröße aus dem Abwasser abgeschieden werden, wobei das den Sandfang (2) verlassende Abwasser mit Hilfe einer Siebvorrichtung (7) gesiebt wird, wobei hierdurch ein Primärschlamm und eine die Siebvorrichtung (7) passierende Suspension entsteht, wobei die Suspension zumindest einer weiteren Behandlungsstufe zugeführt wird, und wobei der Primärschlamm mit Hilfe wenigstens eines Eindickers eingedickt und der eingedickte Primärschlamm einer oder mehreren weiteren Behandlungsstufen zugeführt wird. Ferner wird eine Kläranlage zur Behandlung von Abwasser beschrieben.

## Beschreibung

Die vorliegende Erfindung betrifft ein Verfahren zur Behandlung von Abwasser sowie eine Kläranlage.

Kläranlagen sind im Stand der Technik hinlänglich bekannt und dienen der Entfernung von Verunreinigungen aus privatem und kommunalem Abwasser. Um die Verunreinigungen, bei denen es sich um Feststoffe aber auch um Mikroorganismen handeln kann, aus dem Abwasser zu entfernen, umfassen herkömmliche Kläranlagen in der Regel mehrere Behandlungsstufen.

Nach Passieren einer Siebvorrichtung und eines Sandfangs wird das Abwasser meist einem so genannten Vorklärbecken zugeführt, in dem sich Sink-stoffe durch die langsame Strömungsgeschwindigkeit des Abwassers innerhalb des Vorklärbeckens absetzen oder Schwimmstoffe aufschwimmen. Das von den Sink- und Schwimmstoffen teilweise befreite Abwasser gelangt schließlich in eine biologische Behandlungsstufe, beispielsweise in Form eines Belebungsbeckens, in dem bestimmte noch im Abwasser vorhandene Stoffe mit Hilfe von Mikroorganismen (Bakterien und Hefen) abgebaut werden.

Aufgabe der vorliegenden Erfindung ist es, das bisher bekannte Verfahren zur Abwasserklärung zu beschleunigen und eine Kläranlage vorzuschlagen, mit deren Hilfe das Verfahren umgesetzt werden kann.

Die Aufgabe wird gelöst durch ein Verfahren und eine Kläranlage mit den Merkmalen der unabhängigen Patentansprüche.

Erfindungsgemäß sieht das Verfahren, wie im Stand der Technik bekannt, vor, dass das zu klärende Abwasser zunächst eine Rechenanlage und anschließend einen Sandfang passiert. Mit Hilfe des Rechens werden grobe Verschmutzungen, wie Steine, aber auch Laub und Äste oder Tierkadaver, zurückgehalten und damit aus dem Abwasser entfernt, um zu verhindern, dass derartige Verunreinigungen sowohl die Pumpen der Kläranlage verstopfen als auch das biologische Reinigungsergebnis in der nachfolgend beschriebenen biologischen Behandlungsstufe verschlechtern. Generell sind in diesem Zusammenhang Feinrechen mit wenigen Millimetern und Grobrechen mit einem bis mehreren Zentimetern Spaltweite bekannt, wobei vorliegend beide Arten von Rechen zum Einsatz kommen können.

An dieser Stelle sei darauf hingewiesen, dass nachfolgend immer wieder der Begriff "Abwasser" gebraucht wird. Hierbei handelt es sich stets um ein Gemisch aus Wasser und Verunreinigungen, wobei sich die Art, Größe und Anzahl der Verunreinigungen im Verlauf der Klärung des Abwassers durch Abscheiden oder Umwandung eines Teils der Verunreinigungen ändert. Das Abwasser, das z. B. die nachfolgend beschriebene Siebvorrichtung verlässt, weist damit einen anderen Verunreinigungsgrad auf als das Abwasser, das in die Rechenanlage eintritt oder vom ebenfalls nachfolgend beschriebenen statischen Eindicker in eine biologische Behandlungsstufe, beispielsweise ein Belebungsbecken, geleitet wird.

Das von groben Feststoffen befreite Abwasser gelangt im nächsten Schritt, vorzugsweise auf direktem Weg, in einen Sandfang. In dem vorzugsweise als Absetzbecken ausgebildeten Sandfang werden Sinkstoffe, wie beispielsweise Sand, kleine Steine oder Glassplitter, aus dem Abwasser entfernt, um zu verhindern, dass diese Stoffe in einer nachfolgenden Behandlungsstufe zu betrieblichen Störungen in der Anlage führen (z. B. in Form von Verschleiß oder Verstopfungen).

Der Kern der Erfindung liegt nun darin, dass das den Sandfang verlassende Abwasser mit Hilfe einer Siebvorrichtung gesiebt wird. Hierdurch entstehen eine nachfolgend als Primärschlamm bezeichnete Fraktion sowie eine die Siebvorrichtung passierende Suspension. Bei der zuletzt genannten Suspension handelt es sich um Abwasser mit Feststoffen, die nicht von der Siebfläche der Siebvorrichtung zurückgehalten werden. Hingegen umfasst der Primärschlamm die von der Siebfläche zurückgehaltenen Feststoffe sowie einen Teil der Wasserfraktion des Abwassers, der an den ausgesiebten Feststoffen haften bleibt. Weist die Filtervorrichtung, wie in einer vorteilhaften Weiterbildung vorgesehen, Spritzdüsen auf, mit deren Hilfe Reinigungsflüssigkeit auf die Siebfläche aufgespritzt wird, um zurückgehaltene Feststoffe zu entfernen, so kann der Primärschlamm auch einen Teil der Reinigungsflüssigkeit oder die gesamte aufgespritzte Reinigungsflüssigkeit umfassen, die gemeinsam mit den Feststoffen aufgefangen und aus der Siebvorrichtung ausgetragen wird.

Bei der Siebvorrichtung handelt es sich vorzugsweise um einen Trommelfilter mit einer zylindrischen und mit Hilfe eines Antriebs in eine Drehbewegung versetzbaren Siebfläche. Die Siebfläche wird beispielsweise von innen nach außen durchströmt, so dass sich zurückgehaltene Feststoffe im Inneren sammeln und von dort aus der Siebvorrichtung ausgetragen werden können. Denkbar ist auch der Einsatz anderer Siebvorrichtungen, wie beispielsweise eines Scheibenfilters mit mehreren drehbar gelagerten und einen Hohlraum bildenden Filterscheiben. Die Filterscheiben werden von dem Abwasser bezogen auf den durch die Filterscheiben gebildeten Hohlraum von innen nach außen oder von außen nach innen durchströmt, wobei Verunreinigungen bis zu einer bestimmten Partikelgröße von der Siebfläche des Scheibenfilters zurückgehalten werden.

Die genannte Suspension wird zumindest einer weiteren Behandlungsstufe zugeführt, wobei es sich hierbei um eine weiter unten näher beschriebene biologische Behandlungsstufe, beispielsweise ein Belebungsbecken, handeln kann.

Auch der genannte Primärschlamm wird einer weiteren Behandlungsstufe in Form eines Eindickers zugeführt und dort eingedickt, d.h. sein Feststoffgehalt wird erhöht. Bei dem Eindicker handelt es sich generell um eine Vorrichtung, in der zwei Fraktionen mit unterschiedlichem Feststoffanteil entstehen, wobei die Fraktion mit höherem Feststoffanteil nachfolgend als eingedickter Primärschlamm bezeichnet wird. Der eingedickte Primärschlamm wird nach Verlassen des Eindickers einer oder mehreren weiteren Behandlungsstufen zugeführt, wobei mögliche Behandlungsstufen, wie z. B. ein Faulbehälter, nachfolgend beschrieben sind.

Insbesondere ist es vorteilhaft, wenn der Primärschlamm mit Hilfe eines statischen Eindickers eingedickt wird. Bei einem statischen Eindicker handelt es sich um eine Aufnahmevorrichtung, wie beispielsweise eine Wanne oder ein Becken, in dem der von der Siebvorrichtung kommende Primärschlamm eine Zeit lang zwischengelagert wird. Durch die Lagerung setzen sich Sinkstoffe ab. Wird nun die obere Schlammschicht im statischen Eindicker, die einen niedrigeren Feststoffgehalt aufweist als die untere Schlammschicht, aus dem statischen Eindicker abgeführt, so verbleibt innerhalb des statischen Eindickers eine Primärschlammfraktion, die einen höheren Feststoffanteil aufweist als der die Siebvorrichtung verlassende Primärschlamm. Der statische Eindicker dient also dazu, den Feststoffgehalt des Primärschlamms zu erhöhen, indem Abwasser aus dem statischen Eindicker abgezogen wird, das einen niedrigeren Feststoffgehalt aufweist, als der aus der Siebvorrichtung stammenden Primärschlamm.

Insbesondere ist es von Vorteil, wenn die Aufenthaltszeit des Primärschlamms im statischen Eindicker zwischen 1 h und 10 h, vorzugsweise zwischen 2 h und 8 h, beträgt. Die Zeit ist ausreichend, um die gewünschte Eindickung zu erzielen, ohne dass die gesamte Klärung des Abwassers übermäßig verzögert wird. Hierbei ist es weiter vorteilhaft, wenn der Primärschlamm nach dem Einbringen in den statischen Eindicker während seiner Verweilzeit durch den statischen Eindicker bewegt wird. Mit anderen Worten ist es also von Vorteil, wenn ständig neuer von der Siebvorrichtung stammender Primärschlamm in den statischen Eindicker eingebracht und eingedickter Primärschlamm aus dem statischen Eindicker abgezogen wird. Hierdurch ist ein kontinuierlicher Betrieb des statischen Eindickers und auch der Siebvorrichtung möglich.

Ebenso bringt es Vorteile mit sich, wenn der mit Hilfe des statischen Eindickers eingedickte Primärschlamm nach Verlassen des statischen Eindickers einem maschinellen Eindicker zugeführt und dort weiter eingedickt wird. Als maschineller Eindicker kann ein aus dem Stand der Technik bekannter Scheibeneindicker (aufweisend eine sich langsam drehende Filterscheibe, mit deren Hilfe Flüssigkeit aus dem Primärschlamm abgetrennt wird), ein Bandeindicker (aufweisend ein sich bewegendes Filterband, mit dessen Hilfe Flüssigkeit aus dem Primärschlamm abgetrennt wird), ein Trommeleindicker (aufweisend eine sich langsam drehende Siebtrommel, mit deren Hilfe Flüssigkeit aus dem Primärschlamm abgetrennt wird), ein Schneckeneindicker (aufweisend eine sich innerhalb eines Siebkorbs drehende Förderschnecke, mit deren Hilfe Flüssigkeit aus dem gegen den Siebkorb gepressten Primärschlamm abgetrennt wird) oder auch eine Zentrifuge zum Einsatz kommen. Gemeinsam ist allen maschinellen Eindickern das Merkmal, dass aus dem vom statischen Eindicker kommenden eingedickten Primärschlamm auf mechanische Weise Flüssigkeit abgetrennt wird (die auch noch einen gewissen Feststoffanteil aufweisen kann), wobei hierbei der Feststoffanteil des eingedickten Primärschlamms weiter ansteigt.

Besondere Vorteile bringt es mit sich, wenn der den statischen Eindicker verlassende eingedickte Primärschlamm oder der den maschinellen Eindicker verlassende eingedickte Primärschlamm einer Einrichtung zur Schlammstabilisierung des Primärschlamms zugeführt wird. Unter der Schlammstabilisierung versteht man die Mineralisierung der organischen Substanz im eingedickten Primärschlamm und dadurch dessen chemisch-biologische "Stabilisierung". Die Stabilisierung hat zum Ziel, dass im Anschluss biologische oder chemische Umsetzungsprozesse nur noch begrenzt oder sehr langsam ablaufen, damit eine Klärschlammverwertung erfolgen kann. Schlammstabilisierung kann aerob oder anaerob, aber auch chemisch z.B. durch Nassoxidation bzw. chemisch-physikalisch mittels Kalziumoxid (Branntkalk) oder thermisch durch Verbrennung erfolgen. Vorzugsweise erfolgt die Stabilisierung im Rahmen der Erfindung mit Hilfe eines aus dem Stand der Technik prinzipiell bekannten Faulbehälters, der beispielsweise in Form eines Faulturms vorliegen kann.

Besonders vorteilhaft ist es, wenn das Abwasser in der Siebvorrichtung mit Hilfe einer Siebfläche gesiebt wird, deren Maschenweite zwischen 1 µm und 10 mm liegt. Hierdurch entsteht eine die Siebfläche passierende Suspension, deren verbleibende Feststoffe eine sehr geringe Partikelgröße aufweisen. Die Suspension kann somit problemlos einer nachfolgenden biologischen Reinigungsstufe zugeführt werden, die beispielsweise eine biologische Behandlungsstufe, insbesondere ein Belebungsbecken, umfasst. Bevorzugt liegt die Maschenweite zwischen 5 µm und 5 mm und ganz besonders bevorzugt zwischen 10 µm und 1 mm, so dass auch kleinste Partikel aus dem Abwasser abgeschieden werden können. Die ausgesiebten Feststoffe können schließlich als Teil des vom Abwasser separierten Primärschlamms dem oben genannten statischen Eindicker oder unmittelbar einem maschinellen Eindicker zugeführt werden.

Auch ist es von Vorteil, wenn die von der Siebfläche zurückgehaltenen Feststoffe kontinuierlich oder intervallartig mit Hilfe einer Reinigungsflüssigkeit von der Siebfläche entfernt werden. Die Reinigungsflüssigkeit wird beispielsweise mit Hilfe von einer oder mehreren Spritzdüsen in einer Richtung auf die Siebfläche gespritzt, die der Richtung entgegengesetzt ist, in der das Abwasser die Siebfläche passiert. Die Spritzflüssigkeit und die von der Siebfläche entfernten Feststoffe können schließlich über einen Austrag der Siebvorrichtung aufgefangen und aus der Siebvorrichtung ausgetragen werden. Der Austrag umfasst beispielsweise einen Auffangtrichter, mit dessen Hilfe von der Siebfläche nach unten fallende Feststoffe sowie nach unten fallende Reinigungsflüssigkeit aufgefangen werden. Auch kann der Austrag eine Fördereinrichtung, z. B. eine Förderschnecke, umfassen, mit deren Hilfe die aufgefangenen Feststoffe und die aufgefangene Reinigungsflüssigkeit oder ein Teil derselben aus der Siebvorrichtung ausgetragen werden. Die Siebfläche wird also vorzugsweise im Gegenstrom gereinigt. Der die Siebvorrichtung verlassende Primärschlamm umfasst im Ergebnis Flüssigkeit aus dem Abwasser, das von den ausgesiebten Feststoffen mitgeführt wird, sowie zumindest einen Teil der aufgespritzten Reinigungsflüssigkeit und die von der Siebfläche zurückgehaltenen Feststoffe.

Zusätzlich oder alternativ ist es ebenso denkbar, dass die Siebfläche durch eine Luftströmung, beispielsweise eine so genannte Luftklinge, abgereinigt wird. In diesem Fall wird leicht komprimierte Luft auf die Siebfläche gelenkt, um die Siebfläche von den von der Siebfläche abgeschiedenen Verunreinigungen zu reinigen. Beispielsweise ist es möglich, einen durch ein Gebläse erzeugten Luftstrom mit hoher Geschwindigkeit auf die Siebfläche aufzubringen, um die Siebfläche zu reinigen.

Bei dem Primärschlamm, der die Siebvorrichtung verlässt, handelt es sich in diesem Fall um die von der Siebfläche zurückgehaltenen und mit Hilfe der Luftströmung von dieser wieder entfernten Verunreinigungen aus dem in die Siebvorrichtung einströmenden Abwassers, wobei an den Verunreinigungen ein Teil der Flüssigkeit des Abwassers anhaften kann. Im Vergleich zum Einsatz einer Reinigungsflüssigkeit hat dies den Vorteil, dass der Primärschlamm sich anschließend leichter eindicken lässt, da für die Reinigung keine zusätzliche Reinigungsflüssigkeit in das Verfahren eingebracht wird.

Die Reinigung der Siebfläche der Siebvorrichtung erfolgt also generell mit Hilfe eines Reinigungsfluids, wobei dieses als Reinigungsflüssigkeit, z. B. Wasser, oder als Gas, vorzugsweise Luft, vorliegen kann. Auch eine Mischung aus beidem ist denkbar.

Besondere Vorteile bringt es mit sich, wenn der die Siebvorrichtung verlassende Primärschlamm einen massebezogenen Feststoffgehalt (= Trockensubstanz) von 0,01 % bis 10 %, bevorzugt von 0,1 % bis 5 %, besonders bevorzugt von 0,2 % bis 3,5 %, aufweist. Der Primärschlamm ist in diesem Fall noch relativ flüssig und kann damit besonders gut mit Hilfe eines statischen oder maschinellen Eindickers eingedickt werden.

Des Weiteren ist es vorteilhaft, wenn der die Siebvorrichtung verlassende Primärschlamm mit Hilfe des statischen Eindickers auf einen massebezogenen Feststoffgehalt von 0,1 % bis 15 %, bevorzugt von 1 % bis 10 %, besonders bevorzugt von 2 % bis 6 %, eingedickt wird. Der den statischen Eindicker verlassende Primärschlamm ist in diesem Fall gut pumpbar und kann damit auf einfache Weise einem maschinellen Eindicker zugeführt werden.

Besonders vorteilhaft ist es, wenn der den statischen Eindicker verlassende Primärschlamm mit Hilfe des maschinellen Eindickers auf einen massebezogenen Feststoffgehalt von 1 % bis 15 %, bevorzugt von 2 % bis 10 %, besonders bevorzugt von 4 % bis 8 %, eingedickt wird. Der Primärschlamm hat im Anschluss an den maschinellen Eindicker eine Konsistenz, die eine nachfolgende Stabilisierung, insbesondere in einem Faulbehälter, z.B. einem Faulturm, ermöglicht.

Ebenso bringt es Vorteile mit sich, wenn die die Siebvorrichtung verlassende Suspension einer biologischen Behandlungsstufe, z. B. einem Belebungsbecken, zugeführt und dort biologisch geklärt wird. In der biologischen Behandlungsstufe erfolgt eine aerobe Klärung des Abwassers, d.h., organische Substanz wird mit Hilfe von Mikroorganismen unter aeroben Bedingungen abgebaut. Ferner ist es möglich, dass das die biologische Behandlungsstufe verlassende Abwasser einem Nachklärbecken zugeführt und dort nachgeklärt wird. Hier erfolgt nochmals ein Absetzen von noch vorhandenen Feststoffen bzw. toten Mikroorganismen, wobei eine die abgesetzten Stoffe umfassende Fraktion, der so genannten Überschussschlamm, abgetrennt und ebenfalls einer Stabilisierung zugeführt werden kann.

Des Weiteren ist es vorteilhaft, wenn während der Eindickung des Primärschlamms im statischen Eindicker Abwasser vom Primärschlamm abgetrennt wird, wobei das abgetrennte Abwasser ebenfalls der genannten biologischen Behandlungsstufe zugeführt wird. Das die biologische Behandlungsstufe verlassende Abwasser kann schließlich ebenfalls einem Nachklärbecken zugeführt werden, um dort weiter geklärt zu werden.

Die erfindungsgemäße Kläranlage umfasst, vorzugsweise neben weiteren Behandlungsstufen oder Einrichtungen, wie beispielsweise eine zentrale Steuerung, eine Rechenanlage und einen der Rechenanlage in Strömungsrichtung des Abwassers nachgeordneten Sandfang. Wie bereits oben beschrieben, werden mit Hilfe der Rechenanlage und des Sandfangs Feststoffe unterschiedlicher Partikelgröße aus dem Abwasser abgeschieden.

Ferner umfasst die Kläranlage eine dem Sandfang in Strömungsrichtung des Abwassers nachgeordnete Siebvorrichtung, mit deren Hilfe das den Sandfang verlassende Abwasser gesiebt wird. Hierdurch entsteht, wie ebenfalls beschrieben, ein Primärschlamm und eine die Siebvorrichtung passierende Suspension.

Die Siebvorrichtung sowie die weiteren im Zusammenhang mit der erfindungsgemäßen Vorrichtung beschriebenen Behandlungsstufen können im Übrigen die jeweils oben oder in der Figurenbeschreibung beschriebenen Merkmale aufweisen.

Darüber hinaus umfasst die Kläranlage einen Eindicker, mit dessen Hilfe der die Siebvorrichtung verlassende Primärschlamm eingedickt wird, wobei es sich bei dem Eindicker vorzugsweise um einen statischen Eindicker handelt. Auch ist es von Vorteil, wenn die Kläranlage einen mechanischen Eindicker umfasst, mit dessen Hilfe der den statischen Eindicker verlassende Primärschlamm weiter eingedickt wird.

Besonders vorteilhaft ist es, wenn die Kläranlage eine biologische Behandlungsstufe, beispielsweise in Form eines Belebungsbeckens, umfasst, mit deren Hilfe die die Siebvorrichtung passierende Suspension biologisch geklärt wird. Bei der biologischen Behandlungsstufe kann es sich um ein Becken handeln, das vom Abwasser horizontal und/oder vertikal durchströmt wird.

Auch kann die Kläranlage ein Nachklärbecken umfassen, mit dessen Hilfe Abwasser, das die biologische Behandlungsstufe verlässt, nachgeklärt wird.

Weitere Vorteile der Erfindung sind in dem nachfolgenden Ausführungsbeispiel beschrieben.

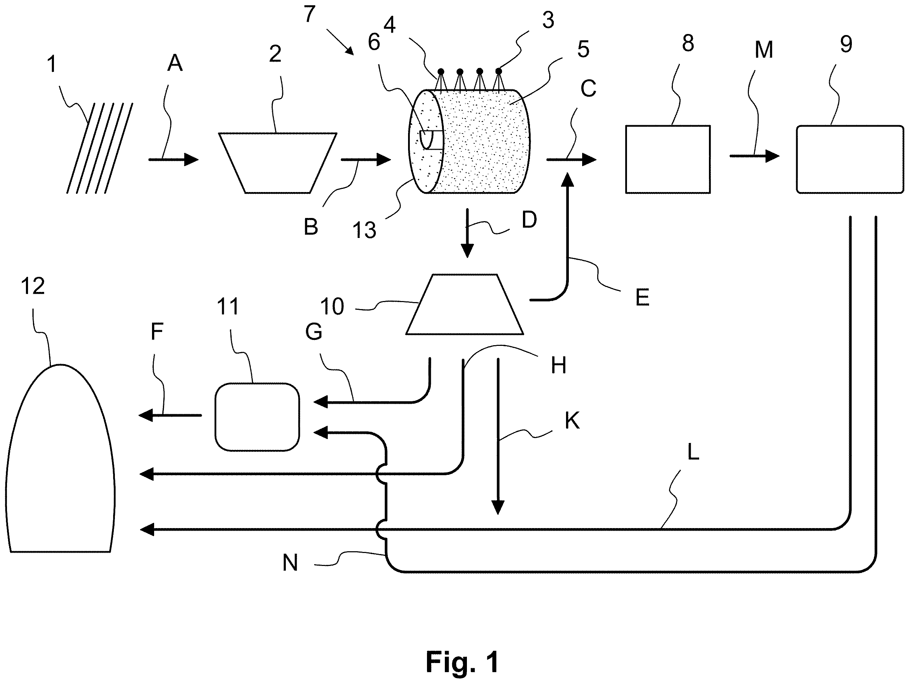

**Figur 1** zeigt schematisch die wesentlichen Behandlungsstufen einer erfindungsgemäßen Kläranlage.

Wie Figur 1 zu entnehmen ist, umfasst die Kläranlage eine Rechenanlage 1, mit deren Hilfe relativ große Feststoffe, wie Steine oder Äste, aus einem Abwasserstrom abgeschieden werden können. Bei der Rechenanlage 1 kann es sich prinzipiell um einen Harkenumlaufrechen handeln, der ein Siebrost und mehrere Umlaufharken aufweist, mit deren Hilfe zurückgehaltene Feststoffe vom Siebrost entfernt werden.

Der Rechenanlage ist ein Sandfang 2 nachgeordnet, wobei der Transportweg des die Rechenanlage 1 verlassenden Abwassers durch den Pfeil A gekennzeichnet ist.

Im Sandfang 2 werden kleinere Sinkstoffe, wie beispielsweise Glassplitter, die nicht von der Rechenanlage 1 aus dem Abwasser entfernt wurden, vom Abwasser zumindest teilweise abgetrennt.

Das den Sandfang 2 verlassende Abwasser gelangt nachfolgend in eine Siebvorrichtung 7, die vorzugsweise eine mit Hilfe eines Antriebs in Drehbewegung versetzbare Siebtrommel 13 mit einer Siebfläche 5 aufweist (die Transportrichtung des Abwassers vom Sandfang 2 zur Siebvorrichtung 7 ist mit dem Pfeil B gekennzeichnet).

Das Abwasser strömt hierbei über eine Stirnseite in die Siebtrommel 13 in diese ein. Feststoffe, die größer als die Maschenweite der Siebtrommel 13 sind, werden von deren Siebfläche 5 zurückgehalten. Im oberen Bereich sind eine oder mehrere Spritzdüsen 3 vorhanden, mit deren Hilfe Reinigungsflüssigkeit 4 (Wasser oder die Siebfläche 5 passierendes Abwasser) von außen auf die Siebfläche 5 aufgespritzt werden kann. Hierdurch werden die innen an der Siebfläche 5 anhaftenden Feststoffe gelöst und fallen gemeinsam mit der Reinigungsflüssigkeit 4 in einen innerhalb der Siebtrommel 13 angeordneten Austrag 6. Alternativ oder zusätzlich kann die Siebfläche 5 auch mit Hilfe der oben beschriebenen Luftströmung gereinigt werden.

Das die Siebfläche 5 passierende Abwasser wird einer biologische Behandlungsstufe 8, z. B. in Form eines Belebungsbeckens zugeführt (Pfeil C), während der Primärschlamm (= vom Austrag 6 aus der Siebvorrichtung 7 ausgetragene Mischung aus Feststoffen, Abwasser und Reinigungsflüssigkeit 4, falls eingesetzt) einem statischen Eindicker 10 zugeführt wird (Pfeil D).

Dort wird der Primärschlamm durch Abscheiden von Abwasser eingedickt, d.h. sein Feststoffgehalt wird erhöht. Das aus dem statischen Eindicker 10 austretende Abwasser wird ebenfalls der biologischen Behandlungsstufe 8 zugeführt, wobei dies auf direktem Wege erfolgen kann. Alternativ kann das Abwasser auch dem Abwasserstrom zwischen der Siebvorrichtung 7 und der biologischen Behandlungsstufe 8 beigemengt werden (Pfeil E).

In der biologischen Behandlungsstufe 8 erfolgt eine weitere Klärung des Abwassers, das anschließend einem Nachklärbecken 9 zugeführt wird, wie es bereits aus dem Stand der Technik bekannt ist (Pfeil M).

Im Nachklärbecken 9 erfolgt eine finale Abtrennung von so genanntem Überschussschlamm durch Schwerkraft, wobei dieser Überschussschlamm direkt einer Einrichtung zur Stabilisierung zugeführt werden kann (Pfeil L). Hierbei handelt es sich beispielsweise um einen Faulbehälter 12, der beispielsweise als Faulturm ausgebildet sein kann.

Der den statischen Eindicker 10 verlassende eingedickte Primärschlamm kann ebenfalls der Einrichtung zur Stabilisierung zugeführt werden. Hierbei sind grundsätzlich drei Alternativen denkbar.

Eine Alternative sieht vor, dass der eingedickte Primärschlamm in die Förderleitung eingebracht wird, über die der Überschussschlamm zur Einrichtung zur Stabilisierung transportiert wird (Pfeil K).

Ebenso ist es denkbar, dass der eingedickte Primärschlamm auf direktem Wege in die Einrichtung zur Stabilisierung geleitet wird. Diese Möglichkeit ist durch den Pfeil H dargestellt.

Schließlich ist es möglich, dass der im statischen Eindicker 10 eingedickte Primärschlamm zunächst einem maschinellen Eindicker 11, wie er weiter oben beschrieben wurde, zugeführt und dort weiter eingedickt wird (Pfeil G). Der den maschinellen Eindicker 11 verlassende Primärschlamm weist in diesem Fall einen Feststoffgehalt auf, der höher ist als der Feststoffgehalt des in den maschinellen Eindicker 11 eingebrachten Primärschlamms.

Nach Verlassen des maschinellen Eindickers 11 gelangt der zusätzlich eingedickte Primärschlamm schließlich in die Einrichtung zur Stabilisierung (Pfeil F).

Die genannten Alternativen können beim Betrieb der Kläranlage zu unterschiedlichen Zeitpunkten oder auch gleichzeitig realisiert sein. Auch können in der konkreten Ausführungsform nur zwei der genannten Alternativen oder auch nur eine Alternative verwirklicht sein.

Schließlich ist es möglich, dass auch der das Nachklärbecken 9 verlassende Überschussschlamm dem maschinellen Eindicker 11 zugeführt wird und dort gemeinsam mit dem vom statischen Eindicker 10 kommenden Primärschlamm weiter eingedickt wird, bevor er dem Faulbehälter 12 zugeführt wird (Pfeil N). Auf die Zugabe von Chemikalien (Polymer) zur Vorbehandlung des das Nachklärbecken 9 verlassenden Überschussschlamms zwischen dem Nachklärbecken 9 und dem Faulbehälter 12 kann insbesondere in diesem Fall verzichtet werden.

Ferner ist es denkbar, dass bei dieser Verfahrensführung der gemeinsamen maschinellen Eindickung des Primär- und des Überschussschlamms eine Homogenisierung der beiden Schlämme sinnvoll sein kann. Diese Homogenisierung kann vor oder auch innerhalb des maschinellen Eindickers 11 erfolgen.

Abschließend sei allgemein darauf hingewiesen, dass das Abwasser, der Primärschlamm und auch der Überschussschlamm vorzugsweise mit Hilfe von Pumpen und Rohrleitungen zwischen den einzelnen Behandlungsstufen transportiert werden.

Die vorliegende Erfindung ist nicht auf das dargestellte und beschriebene Ausführungsbeispiel beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass kein Widerspruch zur Lehre der unabhängigen Ansprüche entsteht.

### Bezugszeichenliste

- 1: Rechenanlage
- 2: Sandfang
- 3: Spritzdüse
- 4: Reinigungsflüssigkeit
- 5: Siebfläche
- 6: Austrag
- 7: Siebvorrichtung
- 8: biologische Behandlungsstufe
- 9: Nachklärbecken
- 10: statischer Eindicker
- 11: maschineller Eindicker
- 12: Faulbehälter
- 13: Siebtrommel

- A: Transportrichtung des die Rechenanlage passierenden Abwassers
- B: Transportrichtung des den Sandfang passierenden Abwassers
- C: Transportrichtung der die Siebvorrichtung passierenden Suspension
- D: Transportrichtung des die Siebvorrichtung verlassenden Primärschlamms
- E: Transportrichtung des den statischen Eindicker verlassenden Abwassers
- F: Transportrichtung des den maschinellen Eindicker verlassenden eingedickten Primärschlamms
- G: erste mögliche Transportrichtung des den statischen Eindicker verlassenden eingedickten Primärschlamms
- H: zweite mögliche Transportrichtung des den statischen Eindicker verlassenden eingedickten Primärschlamms
- K: dritte mögliche Transportrichtung des den statischen Eindicker verlassenden eingedickten Primärschlamms
- L: erste mögliche Transportrichtung des das Nachklärbecken verlassenden Überschussschlamms
- M: Transportrichtung des die biologische Behandlungsstufe verlassenden Abwassers
- N: zweite mögliche Transportrichtung des das Nachklärbecken verlassenden Überschussschlamms

## Patentansprüche

1. Verfahren zur Behandlung von Abwasser in einer Kläranlage,
- wobei das Abwasser eine Rechenanlage (1) und anschließend einen Sandfang (2) passiert,
- wobei mit Hilfe der Rechenanlage (1) und dem Sandfang (2) Feststoffe unterschiedlicher Partikelgröße aus dem Abwasser abgeschieden werden,
- wobei das den Sandfang (2) verlassende Abwasser mit Hilfe einer Siebvorrichtung (7) gesiebt wird, wobei hierdurch ein Primärschlamm und eine die Siebvorrichtung (7) passierende Suspension entsteht,
- wobei die Suspension zumindest einer weiteren Behandlungsstufe zugeführt wird, und
- wobei der Primärschlamm mit Hilfe wenigstens eines Eindickers eingedickt und der eingedickte Primärschlamm einer oder mehreren weiteren Behandlungsstufen zugeführt wird.

2. Verfahren gemäß dem vorangegangenen Anspruch, **dadurch gekennzeichnet, dass** der Primärschlamm mit Hilfe eines statischen Eindickers (10) eingedickt wird, wobei die Aufenthaltszeit des Primärschlamms im statischen Eindicker (10) zwischen 1 h und 10 h, vorzugsweise zwischen 2 h und 8 h, beträgt.

3. Verfahren gemäß einem der vorangegangenen Ansprüche, **dadurch gekennzeichnet, dass** der mit Hilfe des statischen Eindickers (10) eingedickte Primärschlamm einem maschinellen Eindicker (11) zugeführt und dort weiter eingedickt wird.

4. Verfahren gemäß einem der vorangegangenen Ansprüche, **dadurch gekennzeichnet, dass** der den statischen Eindicker (10) verlassende eingedickte Primärschlamm oder der den maschinellen Eindicker (11) verlassende eingedickte Primärschlamm einer Einrichtung zur Stabilisierung des Primärschlamms, vorzugsweise in Form eines Faulbehälters (12), zugeführt wird.

5. Verfahren gemäß einem der vorangegangenen Ansprüche, **dadurch gekennzeichnet, dass** das Abwasser in der Siebvorrichtung (7) mit Hilfe einer Siebfläche (5) gesiebt wird, deren Maschenweite zwischen 1 µm und 10 mm, bevorzugt zwischen 5 µm und 5 mm, besonders bevorzugt zwischen 10 µm und 1 mm, liegt, wobei die ausgesiebten Feststoffe als Teil des vom Abwasser separierten Primärschlamms dem statischen Eindicker (10) zugeführt werden.

6. Verfahren gemäß einem der vorangegangenen Ansprüche, **dadurch gekennzeichnet, dass** die von der Siebfläche (5) zurückgehaltenen Feststoffe kontinuierlich oder intervallartig mit Hilfe eines Luftstroms, und/oder einer Reinigungsflüssigkeit (4) von der Siebfläche (5) entfernt werden, wobei der die Siebvorrichtung (7) verlassende Primärschlamm Flüssigkeit aus dem Abwasser, das von den ausgesiebten Feststoffen mitgeführt wird, sowie im Falle des Einsatzes von Reinigungsflüssigkeit (4) auch zumindest einen Teil der eingebrachten Reinigungsflüssigkeit (4) umfasst.

7. Verfahren gemäß einem der vorangegangenen Ansprüche, **dadurch gekennzeichnet, dass** der die Siebvorrichtung (7) verlassende Primärschlamm einen massebezogenen Feststoffgehalt von 0,01 % bis 10 %, bevorzugt von 0,1 % bis 5 %, besonders bevorzugt von 0,2 % bis 3,5 %, aufweist.

8. Verfahren gemäß einem der vorangegangenen Ansprüche, **dadurch gekennzeichnet, dass** der die Siebvorrichtung (7) verlassende Primärschlamm mit Hilfe des statischen Eindickers (10) auf einen massebezogenen Feststoffgehalt von 0,1 % bis 15 %, bevorzugt von 1 % bis 10 %, besonders bevorzugt von 2 % bis 6 %, eingedickt wird.

9. Verfahren gemäß einem der vorangegangenen Ansprüche, **dadurch gekennzeichnet, dass** der den statischen Eindicker (10) verlassende Primärschlamm mit Hilfe des maschinellen Eindickers (11) auf einen massebezogenen Feststoffgehalt von 1 % bis 15 %, bevorzugt von 2 % bis 10 %, besonders bevorzugt von 4 % bis 8 %, eingedickt wird.

10. Verfahren gemäß einem der vorangegangenen Ansprüche, **dadurch gekennzeichnet, dass** die die Siebvorrichtung (7) verlassende Suspension einer biologischen Behandlungsstufe (8), insbesondere einem Belebungsbecken, zugeführt und dort biologisch geklärt wird, wobei das die biologische Behandlungsstufe (8) verlassende Abwasser vorzugsweise einem Nachklärbecken (9) zugeführt und dort nachgeklärt wird.

11. Verfahren gemäß einem der vorangegangenen Ansprüche, **dadurch gekennzeichnet, dass** während der Eindickung des Primärschlamms im statischen Eindicker (10) Abwasser vom Primärschlamm abgetrennt wird, wobei das abgetrennte Abwasser ebenfalls der biologischen Behandlungsstufe (8) zugeführt wird, wobei das nachfolgend die biologische Behandlungsstufe (8) verlassende Abwasser vorzugsweise einem Nachklärbecken (9) zugeführt wird.

12. Kläranlage zur Behandlung von Abwasser,
- wobei die Kläranlage eine Rechenanlage (1) und einen der Rechenanlage (1) in Strömungsrichtung des Abwassers nachgeordneten Sandfang (2) umfasst, wobei mit Hilfe der Rechenanlage (1) und des Sandfangs (2) Feststoffe unterschiedlicher Partikelgröße aus dem Abwasser abgeschieden werden,
- wobei die Kläranlage eine dem Sandfang (2) in Strömungsrichtung des Abwassers nachgeordnete Siebvorrichtung (7) umfasst, mit deren Hilfe das den Sandfang (2) verlassende Abwasser gesiebt wird, wobei hierdurch ein Primärschlamm und eine die Siebvorrichtung (7) passierende Suspension entsteht, und
- wobei die Kläranlage einen Eindicker umfasst, mit dessen Hilfe der die Siebvorrichtung (7) verlassende Primärschlamm eingedickt wird.

13. Kläranlage gemäß dem vorangegangenen Anspruch, **dadurch gekennzeichnet, dass** der Eindicker als statischer Eindicker (10) ausgebildet ist.

14. Kläranlage gemäß dem vorangegangenen Anspruch, **dadurch gekennzeichnet, dass** die Kläranlage einen mechanischen Eindicker umfasst, mit dessen Hilfe der den statischen Eindicker (10) verlassende Primärschlamm weiter eingedickt wird.

15. Kläranlage gemäß einem der Ansprüche 12 bis 14, **dadurch gekennzeichnet, dass** die Kläranlage eine biologische Behandlungsstufe (8), vorzugsweise in Form eines Belebungsbeckens, umfasst, mit deren Hilfe die die Siebvorrichtung (7) passierende Suspension biologisch geklärt wird, wobei die Kläranlage vorzugsweise ein Nachklärbecken (9) umfasst, mit dessen Hilfe Abwasser, das die biologische Behandlungsstufe (8) verlässt, nachgeklärt wird.
